# EUROPEAN PATENT APPLICATION

(11) **EP 1 953 022 A1**
(43) Date of publication of application: **06.08.2008**
(21) Application number: 07806426.8
(22) Date of filing: 23.08.2007
(51) Int. Cl.: B60K 6/28, B60K 6/22, B60K 6/48, B60K 35/00, B60L 11/14, B66F 9/24

(54) **DISPLAY DEVICE FOR CARGO VEHICLES, AND HYBRID TYPE CARGO VEHICLE HAVING THE DISPLAY DEVICE**

(30) Priority: 30.08.2006 JP 2006234477
(71) Applicant: Mitsubishi Heavy Industries, Ltd., Tokyo 108-8215 (JP); Kawaguchi, Masataka, Takasago-shi Hyogo 676-8686 (JP)
(72) Inventor: KAWAGUCHI, Masataka, Takasago-shi Hyogo 676-8686 (JP); SHIBATA, Naoki, Nagoya-shi Aichi 453-8515 (JP); SHIBATA, Kumiko, Nagoya-shi Aichi 453-8515 (JP); AKAKI, Tomohiro, Takasago-shi Hyogo 676-8686 (JP)
(74) Representative: Henkel, Feiler & Hänzel
(86) International application number: PCT/JP2007/066949
(87) International publication number: WO 2008/026710

(57) **Abstract**

A display device of a hybrid cargo handling vehicle and a hybrid cargo handling vehicle equipped with the display device are provided, with which whether operation is performed by engine drive or motor drive or engine plus motor drive and whether driving operation, i.e. energy consuming operation or energy recovering operation is performed is indicated on a monitor screen, and also fuel consumption rate of the engine, state of charge of the battery, and position of center of gravity of the vehicle are indicated on the monitor screen in both traveling and cargo handling operations, so that the operator is possible by monitoring the displayed indications to perform safe operation of the cargo handling vehicle with high efficiency and high cargo handling power without occurrence of slip down of the cargo or fall down of the vehicle.

## Description

### TECHNICAL FIELD

The present invention relates to a display device of a hybrid cargo handling vehicle such as a hybrid forklift truck having a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, which display device displays operating conditions of the vehicle such as running conditions and cargo handling conditions and operating environments of the vehicle, and a hybrid cargo handling vehicle equipped with the display device.

### BACKGROUND ART

In recent years, hybrid power units are adopted as high-efficient driving means of forklift trucks.

Such a hybrid power unit comprises a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, and the engine or electric motor or engine plus electric motor is selectively used as driving means depending on operating conditions of the forklift truck.

As to display of operating conditions of the forklift truck, only basic operation conditions such as engine rotation speed and battery voltage are displayed on a display panel in the driver's cabin in such a hybrid forklift truck.

In an automobile equipped with a hybrid power unit, operation conditions such as traveling driven by the engine, driven by the electric motor, driven by the engine and motor, percentage of driving power distribution of the engine and motor, fuel consumption in each traveling condition, etc. are displayed in real time on a display panel in the driver's cabin so that the driver can grasp operating conditions of the vehicle exactly.

As to the display system of operation conditions of the hybrid automobile, many inventions and contrivances have been made. Several of them are disclosed, for example, in Japanese Laid-Open Patent Application No. 2002-247706(patent literature 1), Japanese Laid-Open Patent Application No. 2000-247164(patent literature 2), Japanese Laid-Open Patent Application No. 2005-205984(patent literature 3), Japanese Patent Application No.3018958 (patent literature 4), and Japanese Patent Application No.3612697 (patent literature 5).

A forklift truck equipped with a hybrid power unit(hereafter referred to as a hybrid forklift truck) has a traveling section for driving traveling wheels by means of either or both of an engine such as an internal combustion engine and a battery-operated electric motor and a cargo handling section in which an oil hydraulic motor is driven by means of either said engine and battery-operated electric motor for the handling of cargo, and the engine, electric motor, or engine plus electric motor is selectively used as driving means depending on operating conditions of the forklift truck.

In the case of the hybrid forklift truck, the engine and battery-operated electric motor are used as driving means to drive the cargo handling equipment in addition to driving means to drive the traveling equipment which is the case in hybrid passenger cars. Therefore, it is demanded to perform switching between driving by the engine, driving by the battery-operated motor, or driving by both the engine and motor at optimum timing, and in addition to this, to properly share out driving operation(traveling and/or cargo lifting operation in which power is transmitted from the engine and/or motor to the wheels and/or cargo handling equipment) and energy recovering operation in which energy is recovered from the wheels and/or cargo handling equipment to the battery, thereby reducing fuel consumption of the engine in both traveling and cargo handling operations and performing efficient and particularly powerful cargo handling of the cargo handling vehicles.

Further, as the forklift truck travels with cargo loaded on the fork located in the front part of the vehicle, the center of gravity of the cargo-loaded forklift truck is biased toward the fork side, it is needed to control so that the center of gravity is always in a proper range in order to prevent occurrence of slip down of the cargo or fall over of the forklift truck.

Therefore, in a cargo handling vehicle such as a forklift truck with which traveling and cargo handling operations are performed often in parallel, it is indispensable to know whether operation is performed by engine drive or motor drive or engine plus motor drive and whether driving operation, i.e. energy consuming operation or energy recovering operation is performed, and also fuel consumption rate of the engine, state of charge of the battery, and position of center of gravity of the vehicle are displayed in both traveling and cargo handling operations so that the operator is possible to perform safe operation of the cargo handling vehicle with high efficiency and high cargo handling power without occurrence of slip down of the cargo or fall over of the vehicle by monitoring the displayed indications.

However, prior arts disclosed in the patent literatures 1-5 relate to systems to display traveling conditions of automobiles, and systems to display both traveling and cargo handling conditions of cargo handling vehicles such as forklift trucks which perform traveling and cargo handling operations in parallel are not disclosed.

### DISCLOSURE OF THE INVENTION

The present invention was made in light of the problems mentioned above, and the object of the invention is to provide a display device of a hybrid cargo handling vehicle and a hybrid cargo handling vehicle equipped with the display device, with which whether operation is performed by engine drive or motor drive or engine plus motor drive and whether driving operation, i.e. energy consuming operation or energy recovering operation is performed is indicated on a monitor screen, and also fuel consumption rate of the engine, state of charge of the battery, and position of center of gravity of the vehicle are indicated on the monitor screen in both traveling and cargo handling operations, and the operator is possible by monitoring the displayed indications to perform safe operation of the cargo handling vehicle with high efficiency and high cargo handling power without occurrence of slip down of the cargo or fall down of the vehicle.

To attain the object, the present invention proposes a display device of a hybrid cargo handling vehicle having a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, comprising;
a fuel consumption indication data producing means to produce fuel consumption rate indication data by converting detected fuel consumption rate, i.e. flow rate of fuel supplied to the engine into a display signal to display the fuel flow rate in an easily recognizable pattern such as in numeric characters and letters or in a graphic mode,
a battery charge condition indication data producing means to produce battery charge condition indication data by converting battery charge rate estimated based on detected terminal voltage of the battery into a display signal to display the battery charge rate in an easily recognizable pattern, and
a monitor screen for displaying thereon said fuel consumption rate and battery charge rate in said easily recognizable patterns according to said display signals.

In the invention, it is preferable to compose such that;
(1) said fuel consumption indication data producing means allows to display current value of fuel consumption rate in said easily recognizable pattern successively in real time and integrated value thereof for a certain time period on the monitor screen, and said battery charge condition indication data producing means allows to display current value of battery charge rate in said easily recognizable pattern successively in real time and integrated value thereof for a certain time period on the monitor screen;
(2) said fuel consumption indication data producing means allows the fuel consumption rate indication displayed in said easily recognizable pattern to be changed in color to an alarm color different from a usual color when the fuel consumption rate exceeds a predetermined permissible value;
(3) said battery charge condition indication data producing means allows the battery charge condition indication displayed in said easily recognizable pattern to be changed in color to an alarm color different from a usual color when the estimated battery charge rate is lower than a predetermined permissible value; and
(4) said fuel consumption indication data producing means converts the detected fuel consumption rate into a display signal to display the fuel consumption rate in numeric characters and in a graphic mode indicating the fuel consumption rate in level representation and allows the two types of indications to be displayed on the monitor screen concurrently, and said battery charge condition indication data producing means converts the estimated battery charge rate into a display signal to display the fuel consumption rate in numeric characters and in a graphic mode indicating the fuel consumption rate in level representation and allows the two types of indications to be displayed on the monitor screen concurrently.

According to the invention, fuel consumption rate of the engine and battery charge rate are displayed on the monitor screen in an easily recognizable pattern such as in numeric characters and letters or in a graphic mode, further fuel consumption rate and battery charge rate at the current moment are displayed in real time, integrated fuel consumption and battery charge during a fixed period of time are displayed, and fuel consumption rate and battery charge condition are displayed by level representation, so the operator can select operation mode among drive by engine, by electric motor, and by engine plus motor so that fuel consumption is minimum while monitoring current fuel consumption rate in numerical value and in level representation in both traveling and cargo handling operation of the vehicle. Therefore, the cargo handling vehicle can be operated efficiently at low fuel consumption.

Further, the operator can drive the cargo handling vehicle while monitoring current and integrated battery charge rate in numerical value and in level representation in both traveling and cargo handling operation of the vehicle, so the cargo handling vehicle can be operated with appropriate battery charge rate maintained by preventing occurrence of insufficient battery charge rate.

As fuel consumption rate and battery charge condition are displayed in an easily recognizable pattern such as numeric characters and letters or in a graphic mode, the operator can recognize without fail the current state of fuel consumption rate, fuel consumption, and battery charge condition by taking a glance at the monitor screen.

By displaying fuel consumption rate and battery charge rate on the monitor screen in parallel, the operator can know fuel consumption rate in contradistinction to battery charge condition and grasp current operating condition comprehensively.

Further, when fuel consumption rate is excessive or charge rate of battery is excessively decreased, the fuel consumption indication or the battery charge condition indication is changed in color to an alarm color different from a usual color, so the operator can recognize at a glance without fail that fuel consumption rate is excessive or battery charge rate is excessively decreased, and operation of the cargo handling vehicle with high efficiency can be achieved and occurrence of insufficiently charged state of the battery can be prevented.

The invention proposes a display device of a hybrid cargo handling vehicle having a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, comprising;
a vehicle contour indication data producing means to produce vehicle contour indication data to display the cargo handling vehicle in silhouette,
an actuating elements indication data producing means to produce actuating elements indication data to display actuating elements such as the engine, battery, electric motor, oil-hydraulic motor, cargo handling equipment, etc. in shapes of colored graphic symbols,
an operating condition determining means to determine whether the cargo handling vehicle is in driving operation(traveling and/or cargo lifting operation) or in energy recovering operation based on detected operating conditions of the actuating elements,
an operating condition indication data producing means to produce operating condition indication data to display said determined operating condition of the cargo handling vehicle so that directions of energy transmission between the actuating elements are easily recognizable, and
a monitor screen for displaying thereon concurrently said cargo handling vehicle in silhouette, said actuating elements in shapes of colored graphic symbols, and said operating condition of the cargo handling vehicle indicating directions of energy transmission between the actuating elements.

In the invention, it is preferable to compose such that;
(1) said operating condition indication data producing means allows energy transmission between the actuating elements to be displayed by arrows connecting the graphic symbols of the actuating elements, the arrows being differentiated in color to discriminate energy transmission in driving operation from energy transmission in energy recovering operation,
(2) said operating condition indication data producing means allows energy transmission between the actuating elements to be displayed by heads of arrows moving sequentially in direction of energy transmission between the graphic symbols of the actuating elements, the heads of arrows being differentiated in color to discriminate energy transmission in driving operation from energy transmission in energy recovering operation,
(3) there are provided a background condition indication data producing means to produce background condition indication data to determine background color tone of the image displayed on the monitor screen in accordance with detected brightness around the cargo handling vehicle, and the background condition indication data producing means allows said determined color tone background to be displayed on the monitor screen, and
(4) said background condition indication data producing means can produce actuating element indication data to display actuating elements such as the engine, battery, electric motor, oil-hydraulic motor, cargo handling equipment, etc. in shapes of graphic symbols of color tones different from those of the background or the silhouette of the cargo handling vehicle.

According to the invention, energy flow lines in driving operation and in energy recovering operation are displayed on the monitor screen together with the contour of the cargo handling vehicle and actuating elements thereof such that each of the energy flow lines are composed of arrows(heads of arrows), driving operation lines and energy recovering operation lines are different in color, and direction of energy flow can be recognized by the move of brightness of the arrows(heads of arrows) in energy transmission direction, so the operator can recognize whether the cargo handling vehicle is operated in driving operation or energy recovering operation by taking a glance at the monitor screen. Therefore, the operator can adjust distribution of driving operation and energy recovering operation of the cargo handling vehicle appropriately and efficient operation thereof is made possible.

According to the invention, background color tone of the image on the monitor screen is changed depending on whether the cargo handling vehicle is operated in a bright environment or dark environment, and the actuating elements are displayed in a tone different from the background tone, so the operator can view the image indicating operation condition of the cargo handling vehicle on the monitor screen without eyestrain.

The invention proposes a display device of the hybrid cargo handling vehicle comprising;
a barycenter position indication data producing means to produce barycenter position indication data to display in a graphic form the center of gravity of the cargo-loaded cargo handling vehicle estimated based on load measurements at several positions of the vehicle, and
a monitor screen for displaying thereon said barycenter position in a graphic form.

In the invention, it is preferable to compose such that;
(1) said barycenter position indication data producing means allows the barycenter position indication displayed in said graphic form to be changed in color to an alarm color different from a usual color when said estimated position of barycenter is out of the predetermined permissible range of barycenter position, and
(2) said barycenter position indication data producing means produces an adequate cargo handling drive source indication data to indicate on the monitor screen a drive source selected from among the electric motor, engine, and the motor plus engine based on the detected barycenter position to be adequate to drive the cargo handling equipment.

According to the invention, the position data of center of gravity of the cargo handling vehicle loaded with cargo is converted into a graphic display signal and displayed on the monitor screen. Further, a drive source or sources to drive the cargo handling equipment, and the barycenter position indication is changed in color to an alarm color when the barycenter is out of the predetermined permissible range of barycenter position, so the operator can recognize without fail in cargo handling operation that whether the center of gravity of the cargo handling vehicle is in an appropriate position or not by taking a glance at the barycenter position indication and adequate cargo handling drive source indication, and occurrence of slip down of the cargo or fall down of the cargo handling vehicle in cargo handling operation can be prevented and safety in forklift operation is improved.

Further, the invention proposes a hybrid cargo handling vehicle equipped with any display device or devices according to any one of claims 1-13.

According to the invention, whether operation of the hybrid cargo handling vehicle is performed by engine drive or motor drive or engine plus motor drive and whether driving operation, i.e. energy consuming operation or energy recovering operation is performed is indicated on the monitor screen, and also fuel consumption rate of the engine, state of charge of the battery, and position of center of gravity of the vehicle are indicated on the monitor screen in both traveling and cargo handling operations, so the operator is possible by monitoring the displayed indications to perform safe operation of the cargo handling vehicle with high efficiency and high cargo handling power without occurrence of slip down of the cargo or fall down of the vehicle.

### BRIEF DESCRIPTION OF THE DRAWINGS

FIG.1 is a control block diagram of the first to fourth embodiments of the display device of the hybrid forklift truck according to the present invention.
FIG.2 is a monitor screen image of the first embodiment when the forklift truck is at a stop.
FIG.3 is a monitor screen image of the first embodiment when fuel consumption rate is displayed.
FIG.4 is a monitor screen image of the first embodiment when battery charge rate is displayed.
FIG.5 is a monitor screen image of the first embodiment when supplementary display of fuel consumption rate and battery charge rate is done.
FIG.6 is a drawing for explaining an example of supplementary display of fuel consumption rate indicated by level representation in the case of the first embodiment.
FIG.7A is an example of display of average fuel consumption rate, and FIG.7B is an example of display of fuel consumption rate when cargo handling and when traveling of the first embodiment.
FIG.8 is a drawing for explaining an example of supplementary display of battery charge rate of the first embodiment in which the battery charge rate is indicated by level representation.
FIG.9A is another example of supplementary display of battery charge rate indicated by level representation in the case of the first embodiment, and FIG.9B shows when the two examples of supplementary displays of battery charge rate indicated by level representation are displayed.
FIG.10 is a monitor screen image of the second embodiment when the forklift truck is in driving operation(traveling and/or cargo lifting operation).
FIG.11 is a monitor screen image of the second embodiment when the forklift truck is in energy recovering operation.
FIG.12 is a monitor screen image of the second embodiment when the forklift truck is in energy recovering operation with the energy recovering state expressed emphatically.
FIG. 13 is a monitor screen image of the third embodiment in which barycenter position of the forklift truck is indicated by level representation.
FIGS. 14A-14D show examples of display of the barycenter position of the third embodiment indicated by level representation.
FIG.15A is a monitor screen image of the fourth embodiment when the forklift truck is in bright environment, and FIG.15B is when the forklift truck is in dark environment.
FIG.16 is a schematic diagram of power transmission in a hybrid forklift truck to which the present invention is applied.
FIG.17 is a partial perspective view showing location of the display panel.

### BEST EMBODIMENT FOR IMPLEMENTING THE INVENTION

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

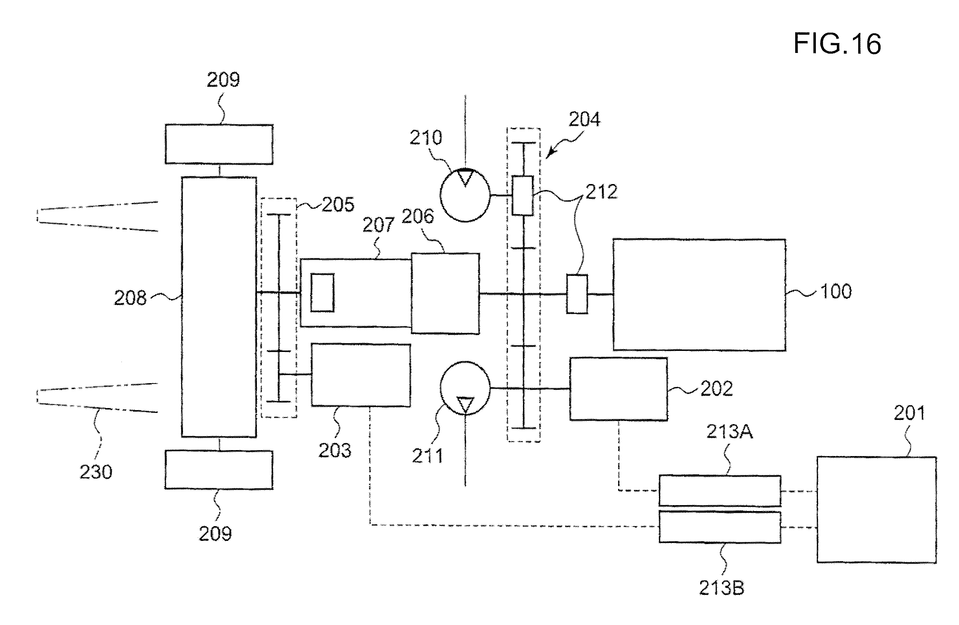

FIG.16 is a schematic diagram of power transmission in a hybrid forklift truck to which the present invention is applied.

Referring to FIG.16, reference numeral 100 is an engine such as an internal combustion engine, 201 is a battery, 202 is a first motor(motor/generator), 203 is a second motor (motor/generator), 213A is an inverter for the first motor, 213B is an inverter for the second motor, 209 are front wheels, 208 is a deferential gear unit, 206 is a torque converter, 207 is a FNR(forward, neutral, reverse) clutch, 211 is an oil-hydraulic pump, 210 is an oil-hydraulic motor, and 212 are one-way clutches.

Reference numeral 204 is a first gear train connecting the engine 100 and the first motor(motor/generator) 202 and connecting them to the torque converter 206 of the traveling section and to the oil-hydraulic pump 211 and oil-hydraulic motor 210 of the cargo handling section. Reference numeral 205 is a second gear train connecting the output end of the FNR clutch and the second motor 203 to the input end of the differential gear unit 208.

When the hybrid forklift truck is driven by the engine 100 in driving operation(traveling and/or cargo lifting operation), the output of the engine 100 is transmitted to the first gear train 204 via one of the one-way clutches 212. In this case, when allowing the forklift truck to travel, the FNR clutch 207 is engaged, and the rotation force of the engine 100 is transmitted to the front wheels 209 via the first gear train 204, torque converter 206, FNR clutch 207, second gear train 205, and differential gear unit 208.

When allowing the forklift truck to lift cargo loaded on the fork, the oil-hydraulic pump 211 is driven by the output of the engine 100 transmitted via the first gear train 204, and oil-hydraulic cylinders not shown in the drawing are driven by working oil pressurized by the oil-hydraulic pump 211 to lift and/or tilt the fork 230.

When the hybrid forklift truck is driven by the battery-operated motor in driving operation(traveling and/or cargo lifting operation) and when allowing the forklift truck to travel, the FNR clutch 207 is disengaged, the second motor 203 is driven by the electric power supplied from the battery 201 via the inverter 213B, the rotation force of the second motor 203 is transmitted to the front wheels 209 via the second gear train 205 and differential gear unit 208.

When allowing the forklift truck to lift cargo loaded on the fork, the first motor 202 is driven by the electric power supplied from the battery 201 via the inverter 213A, the oil-hydraulic pump 211 is driven by the first motor 202 via the first gear train 204, and oil-hydraulic cylinders not shown in the drawing are driven by working oil pressurized by the oil-hydraulic pump 211 to lift and/or tilt the fork 230.

When the hybrid forklift truck is driven by the engine plus battery-operated motor in driving operation(traveling and/or cargo lifting operation) and when allowing the forklift truck to travel, the output torque of the engine 100 is transmitted to the differential gear unit 208 via one of the one-way clutch 212, first gear train 204, torque converter 206, FNR clutch 207, second gear train 205. On the other hand, the driving torque of the second motor 203 driven by the electric power supplied from the battery 201 via the inverter 213B is transmitted to the differential gear unit 208 via the second gear train 205, and the front wheels 209 is driven by both the engine 100 and the second motor 203 via the differential gear unit 208. When allowing the forklift truck to lift cargo loaded on the fork, the oil-hydraulic pump 211 is driven by both the engine 100 and the first motor 202 via the first gear train 204, and oil-hydraulic cylinders not shown in the drawing are driven by working oil pressurized by the oil-hydraulic pump 211 to lift and/or tilt the fork 230.

In energy recovering operation, the second motor 203(motor/generator) is driven by the rotation of the front wheels 209 via the differential gear unit 208 to function as a generator and the generated electricity is stored in the battery 201 via the inverter 213B.

Energy recovering in cargo handling operation is performed such that pressurized working oil returned from the oil-hydraulic cylinder when the fork 230 is allowed to lift down is introduced to the oil-hydraulic motor 210 to drive it. The rotation force of the oil-hydraulic motor 210 is transmitted via the first gear train 204 to the first motor(motor/generator) 202 to rotate it to allow it to work as a generator. The generated electricity is stored in the battery 201 via the inverter 213A.

The present invention relates to a display device of a hybrid vehicle such as a hybrid forklift truck equipped with the power transmission system composed as described above.

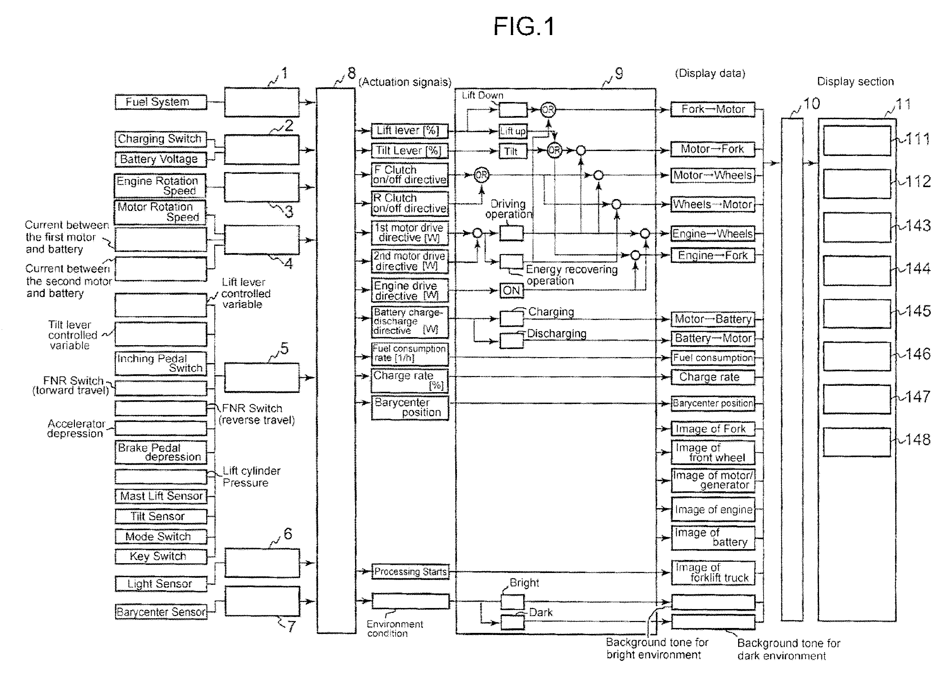

FIG.1 is a control block diagram of the first to fourth embodiments of the display device of the hybrid forklift truck according to the present invention.

Referring to FIG.1, reference numeral 1 is a fuel flow sensor for detecting fuel flow rate, 2 is a battery sensor which detects a state-of-charge sent from a charging switch and a battery voltage, 3 is an engine condition sensor which detects engine rotation speed, etc., and 4 is a motor/generator condition sensor which detects rotation speed of the first and second motors, electric current between the first motor and battery, and electric current between the second motor and battery.

Reference numeral 5 is a control element condition sensor which detects lift lever controlled variable, tilt lever controlled variable, accelerator depression, brake pedal depression, lift cylinder pressure, etc. and detects signals from a mast lift sensor, tilt sensor, mode switch, key switch, etc.

Reference numeral 6 is background condition sensor composed of a light sensor, and 7 is a barycenter sensor for detecting the center of gravity of the cargo-loaded forklift truck.

As shown in FIG.1, signals detected by the fuel flow sensor 1, battery sensor 2, engine condition sensor 3, motor/generator condition sensor 4, control element condition sensor 5, background sensor 6, and barycenter sensor 7 are inputted to a power control section 8. The power control section 8 sends signals to the engine 100, first motor(motor/generator) 202, and second motor(motor/generator)203, etc. constituting the power transmission system based on the detected signals and produces actuating signals to send them to a display data producing section 9.

Said actuation signals are: lift lever(%), tilt lever(%), F clutch ON/OFF directive, R clutch ON/OFF directive, first motor drive directive(W), second motor drive directive(W), engine drive directive(W), battery charge-discharge directive(W), fuel consumption rate (1/h), battery charge rate(%), center of gravity in longitudinal direction, start of computation, and surrounding light conditions.

Further, as shown in FIG.1, the display data producing section 9 produces display data based on each of the actuating signals to send the display signal to a display section 11 via an output device 10.

Said display data are: fork → motor, motor → fork, motor → tire, tire → motor, motor → battery, battery → motor, fuel consumption rate, battery charge rate, center of gravity in longitudinal direction, an image of fork, an image of front wheel, an image of motor/generator, an image of engine, an image of battery, an image of forklift truck, background tone for bright environment, and background tone display for dark.

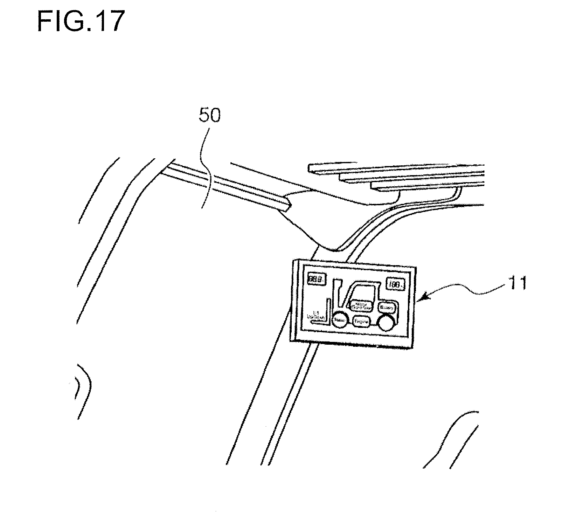

The display section panel 11 is disposed in the driver's cabin 50 at a position easily visible for the operator as shown in FIG. 17.

On the display section 11 are displayed fuel consumption rate indication 111 showing current fuel consumption rate and integrated fuel consumption in an easily recognizable pattern such as in numeric characters and letters or in a graphic mode, battery charge condition indication 112 showing current and integrated battery charge condition in an easily recognizable pattern, vehicle contour indication 148 showing the forklift truck in silhouette, actuating element indication 143 showing actuating elements such as the engine, battery, electric motor, oil-hydraulic motor, cargo handling equipment, etc. in shapes of graphic symbols, operating condition indication 144 showing whether the forklift truck is in driving operation(traveling and/or cargo lifting operation) or in energy recovering operation by arrows moving sequentially in direction of energy transmission between the actuating elements, background condition indication 145 to select background color tone of the monitor screen in accordance with brightness around the forklift truck, barycenter position indication 146 showing in a graphic form the center of gravity of the cargo-loaded forklift truck determined based on load measurements at several positions, and adequate cargo handling drive source indication 147 showing a drive source selected from among the electric motor, engine, and the motor plus engine based on the detected barycenter position to be adequate to drive the cargo handling equipment.

### [The first embodiment]

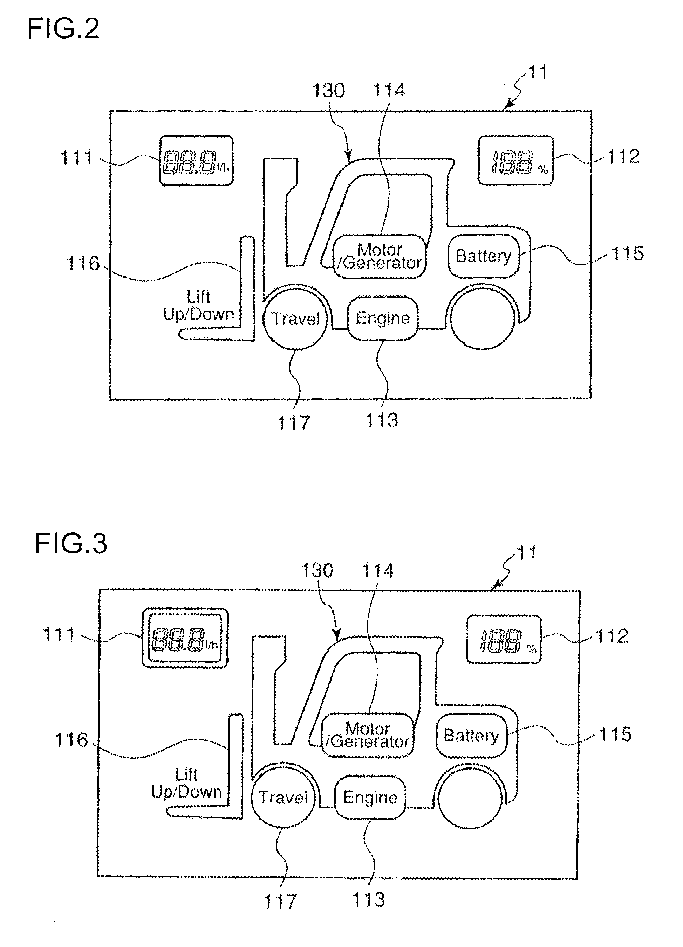

FIGS.2 to 9 show examples of screen images of a first embodiment.

FIG.2 shows a display screen image on the display section 11 when the forklift truck is at a stop. There are displayed the contour 130 and fork 116 of the forklift truck of the vehicle contour indication 148, and further the engine 113, motor(motor/generator) 114, battery 115, and travel device(front wheels) 117 of the actuating elements indication 143.

Further, the fuel consumption indication 111 is displayed which shows current fuel consumption rate (1/h) and integrated fuel consumption in numerical value in a rectangular window frame.

The battery charge condition indication 112 is displayed which shows current and integrated battery charge condition in numerical value by % unit in a rectangular window frame.

FIG.3 shows a display screen image when fuel consumption rate has exceeded the predetermined permissible value in operation of the forklift truck. It is recognized that the rectangular window of the fuel consumption indication 111 is double framed. At the same time, display color thereof is changed to an alarm color which is different from a usual color.

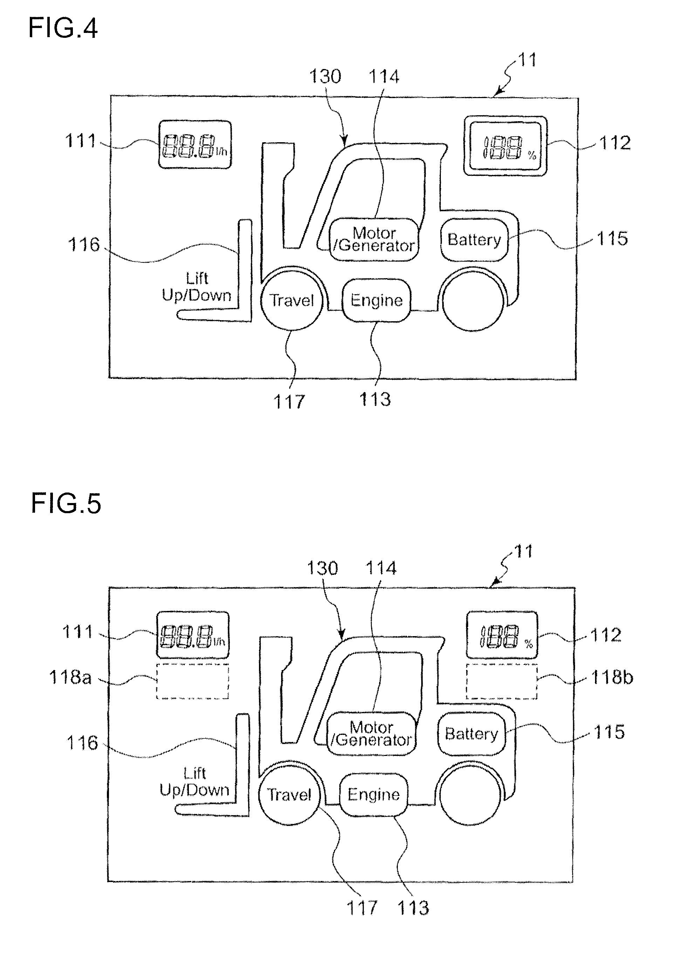

FIG.4 shows a display screen image when battery charge condition has deteriorated below predetermined permissible state-of-charge in operation of the forklift truck. It is recognized that the rectangular window of the battery charge condition indication 112 is double framed. At the same time, display color thereof is changed to an alarm color which is different from a usual color, for example, green color display is changed to red color display.

According to the embodiment, when fuel consumption rate is excessive or charge rate of battery is excessively decreased, the rectangular widow of the fuel consumption indication 111 or the battery charge condition indication 112 is double framed and at the same time changed in color to an alarm color which is different from a usual color, so the operator can recognize excessive fuel consumption rate or excessively decreased battery charge rate at a glance without fail, and operation of the forklift truck with high efficiency can be achieved and occurrence of insufficiently charged state of the battery can be prevented.

In FIGS.3 and 4, indications the same as those of FIG. 2 are denoted by the same reference numerals.

In FIG.5, fuel consumption rate indication by level representation 118a and battery charge condition indication by level representation 118b are displayed in addition to the display screen image of FIG.3 and FIG.4. In FIG.5, indications the same as those of FIG.2 are denoted by the same reference numerals.

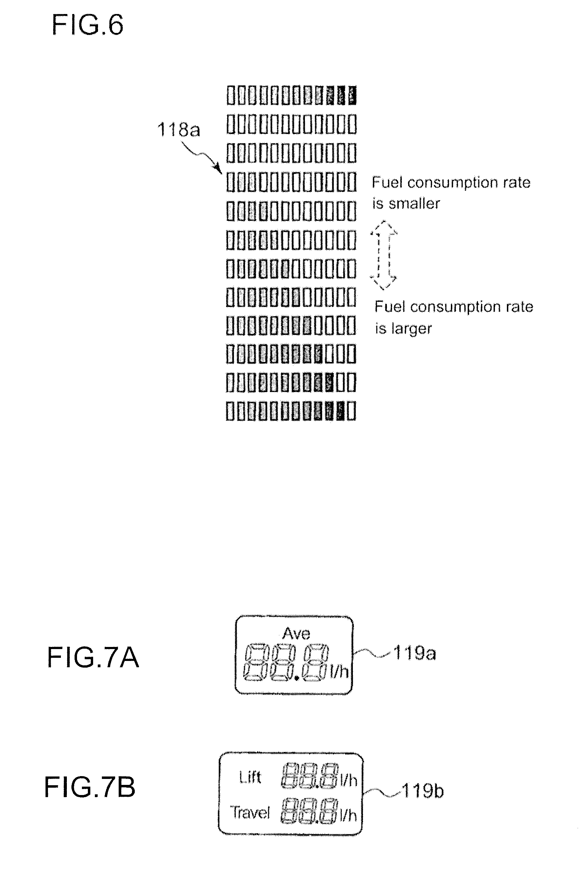

FIG.6 shows examples of fuel consumption rate indication by level representation 118a. In the drawing, each of the indications means that the upper the indication is, the smaller the fuel consumption rate(which means fuel consumption rate is good), and the lower the indication is, the larger the fuel consumption rate(which means fuel consumption rate is excessive and worse).

FIG.7A is an example of display of progressive average fuel consumption rate indication 119a instead of the fuel consumption rate indication by level representation 118a. FIG.7B is an example of fuel consumption rate indication when cargo handling and when traveling 119b instead of the fuel consumption rate indication by level representation 118a.

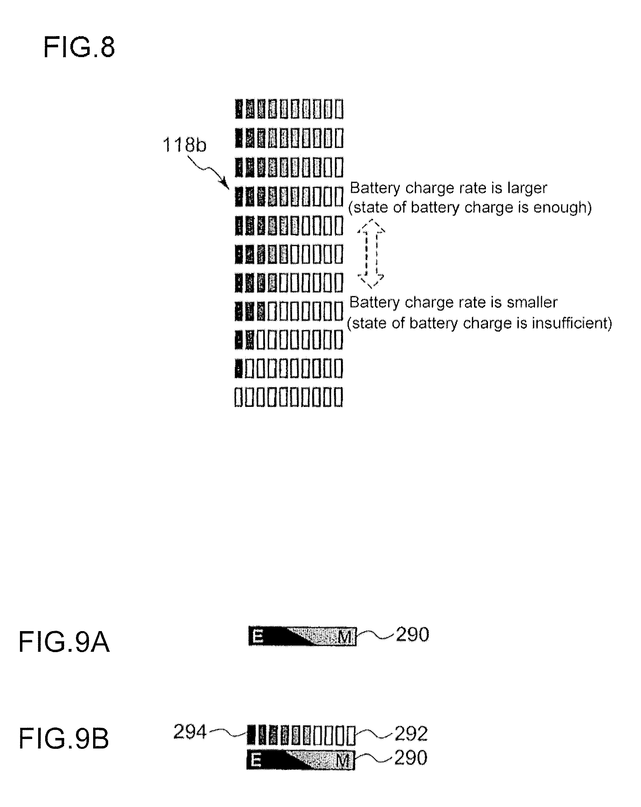

FIG.8 shows examples level representation 118b of battery charge condition indication. In the drawing, each of the indications means that the upper the indication is, the larger the battery charge rate (which means the state of battery charge is enough), and the lower the indication is, the smaller the battery charge rate (which means state of battery charge is insufficient).

FIG.9A is an example of modal indication 290 for aiding judgment of mode switching between drive by engine (E), by electric motor (M), and by engine plus motor (E+M), depending on state-of-charge of the battery. Concretively, the modal indication 290 is displayed below the level indication 292 as shown in FIG.9B. When the battery charge state becomes insufficient, solid black filling 294 in the level indication 292 shifts to the left, and operation condition of the forklift enters the drive-by-engine zone (E). As the battery charge rate increases, switching to the drive-by-engine plus motor and to drive-by-motor becomes permissible.

According to the first embodiment, fuel consumption rate of the engine and battery charge condition are displayed on the monitor screen 11 as fuel consumption rate indication 111 and battery charge condition indication 112 in an easily recognizable pattern such as in numeric characters and letters or in a graphic mode, further fuel consumption rate and battery charge rate at the current moment are displayed in real time, integrated fuel consumption and battery charge during a fixed period of time are displayed, and fuel consumption rate and battery charge condition are displayed by level representation 118a and 118b as shown in FIGS. 5 to 9, so the operator can select operation mode among drive by engine(E), by electric motor(M), and by engine plus motor(E+M) so that fuel consumption is minimized while monitoring current fuel consumption rate on fuel consumption rate indication 111 and level representation 118a of fuel consumption rate in both traveling operation and cargo handling operation of the forklift truck. Therefore, the forklift truck can be operated efficiently at low fuel consumption and powerfully at cargo handling.

Further, the operator can drive the forklift truck while monitoring current and integrated battery charge condition by battery charge condition indication 112 and level representation 118b thereof in both traveling operation and cargo handling operation of the forklift truck, so the forklift truck can be operated with appropriate battery charge rate maintained by preventing occurrence of insufficient battery charge rate.

As fuel consumption rate and battery charge condition are displayed in an easily recognizable pattern such as numeric characters and letters or in a graphic mode, the operator can recognize without fail the current state of fuel consumption rate, fuel consumption, and battery charge condition by taking a glance at the fuel consumption rate indication 111, level representation 118a thereof, battery charge condition indication 112, and level representation 118b thereof.

By displaying fuel consumption rate indication 111 and battery charge condition indication 112 on the monitor screen in parallel, the operator can know fuel consumption rate in contradistinction to battery charge condition and grasp current operating condition comprehensively.

Further, when fuel consumption rate is excessive or charge rate of battery is excessively decreased, the rectangular widow of the fuel consumption indication 111 or the battery charge condition indication 112 is changed in color to an alarm color different from a usual color, so the operator can recognize at a glance without fail that fuel consumption rate is excessive or battery charge rate is excessively decreased, and operation of the forklift truck with high efficiency can be achieved and occurrence of insufficiently charged state of the battery can be prevented.

### [The second embodiment]

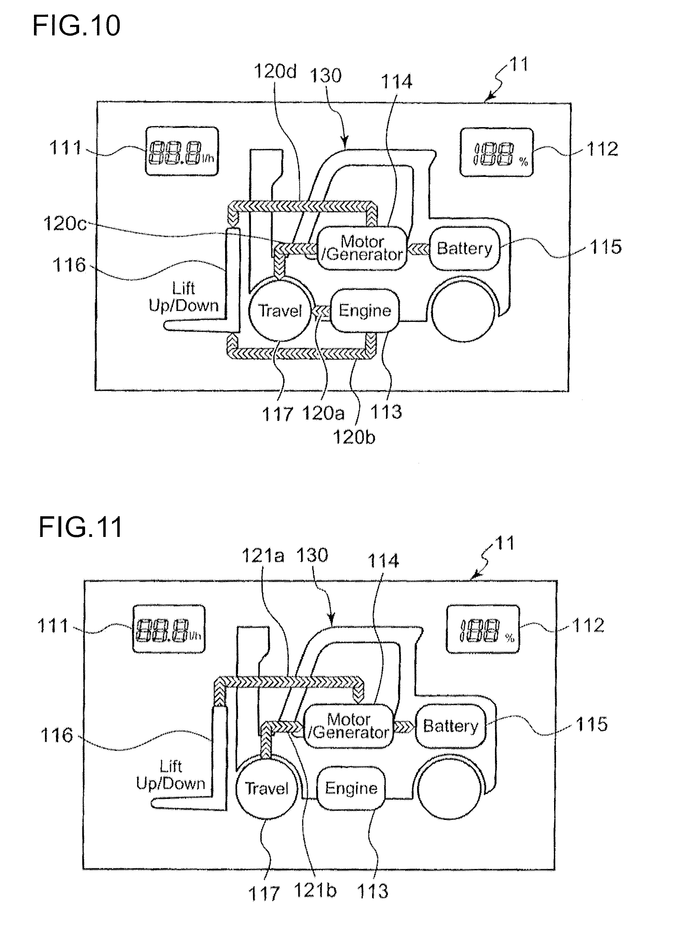

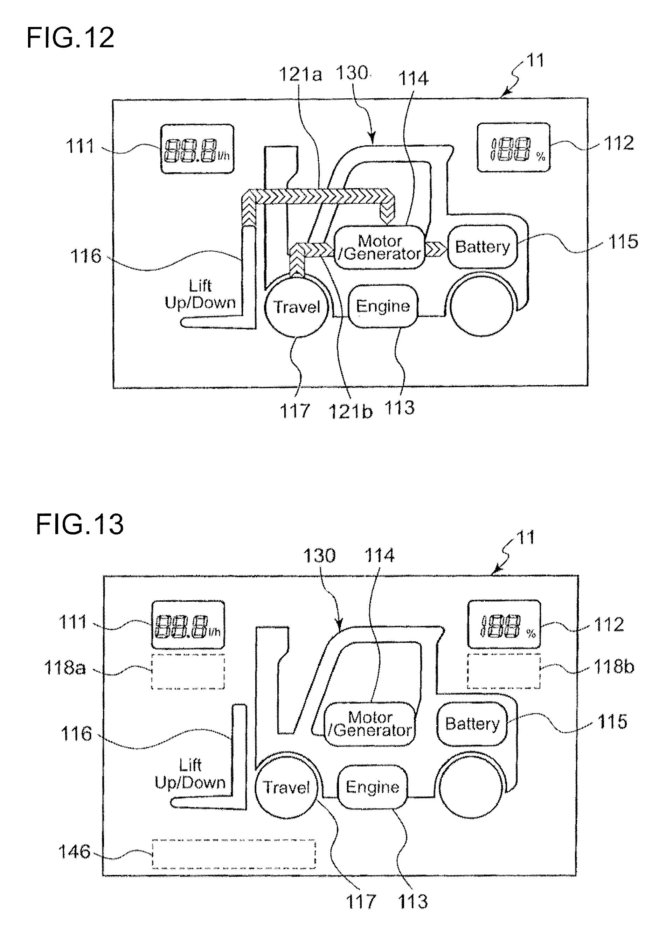

FIGS. 10 to 12 show examples of screen images of a second embodiment, in which FIG.10 is a monitor screen image when the forklift truck is in driving operation (traveling and/or cargo lifting operation), FIG.11 is a monitor screen image when the forklift truck is in energy recovering operation, and FIG. 12 is a monitor screen image when the forklift truck is in energy recovering operation with the energy recovering state expressed emphatically.

In FIG.10 showing a monitor screen image when the forklift truck is in driving operation (traveling and/or cargo lifting operation), the operating condition indication 144 is shown which includes an engine driven travel drive line 120a from the engine 113 to the travel device (front wheels) 117, an engine driven cargo handling drive line 120b from the engine 113 to the fork 116, a motor driven travel drive line 120c from the battery 115 via the motor(motor/generator)114 to the travel device(front wheels) 117, and a motor driven cargo handling drive line 120d from the motor(motor/generator) 114 to the fork 116.

In FIG.11 showing a monitor screen image when the forklift truck is in energy recovering operation and FIG.12 showing when the forklift truck is in energy recovering operation with the energy recovering state expressed emphatically, the operating condition indication 144 is shown which includes cargo handling energy recovering line 121a from the fork 116 via the motor (motor/generator) 114 to the battery 115, and traveling energy recovering line 121b from the travel device (front wheels) 117 via the motor(motor/generator)114 to the battery 115.

In FIG.12 showing the monitor screen image when the forklift truck is in energy recovering operation with the energy recovering state expressed emphatically, the energy recovering lines 121a and 121b of the operating condition indication 144 are depicted by heavy-line arrows.

In the second embodiment shown in FIGS.10 to 12, drive lines depicted in FIG.10 and recovering lines consisting of arrows (heads of arrows) depicted in FIG.11 and FIG.12 are different in color and brightness of the color of each of the arrows (heads of arrows) constituting each of the lines changes sequentially in direction of energy transmission between the actuating elements such as the engine, motor, battery, front wheels, and fork so that it is felt that as if energy is transmitted in that direction.

In FIGS.10 to 12, indications the same as those of FIG.2 are denoted by the same reference numerals.

According to the second embodiment, energy flow lines in driving operation and in energy recovering operation are displayed on the monitor screen 11 together with the contour of the forklift and actuating elements thereof such that each of the energy flow lines are composed of arrows(heads of arrows), driving operation lines and energy recovering operation lines are different in color, and direction of energy flow can be recognized by the move of brightness of the arrows(heads of arrows) in energy transmission direction, so the operator can recognize whether the forklift is operated in driving operation or energy recovering operation by taking a glance at the monitor screen 11. Therefore, the operator can adjust distribution of driving operation and energy recovering operation of the forklift appropriately and efficient operation thereof is made possible.

### [The third embodiment]

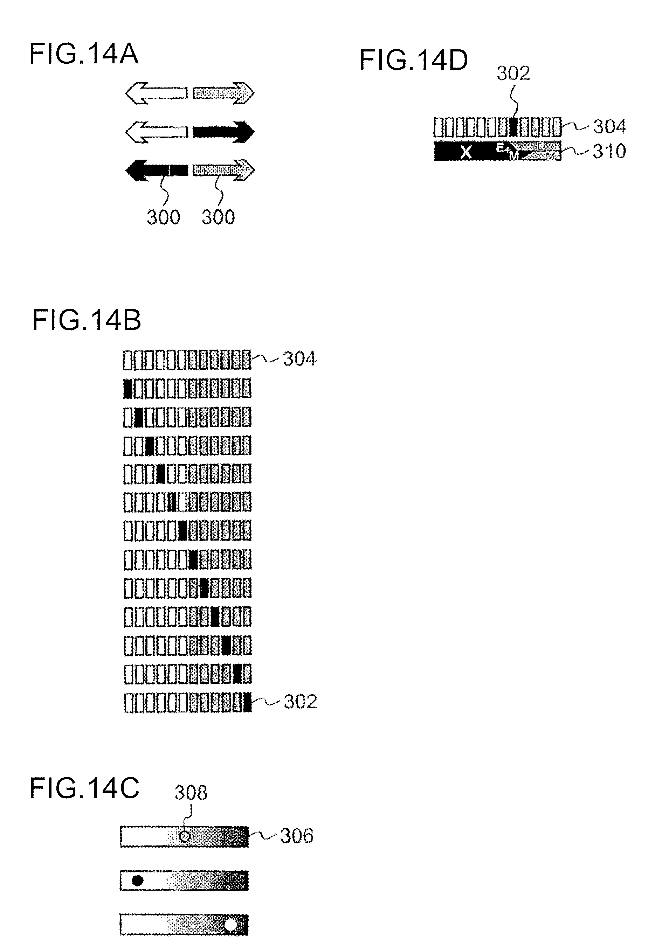

FIG.13 and FIGS.14A-14D show examples of screen images of a second embodiment, in which FIG.13 is a monitor screen image in which barycenter position of the forklift truck is indicated by level representation, and FIGS.14A-14D show examples of display of the barycenter position indicated by level representation.

In FIG.13, the barycenter position indication 146 is displayed on the monitor screen 11, the barycenter position determined based on load measurements at several positions of the cargo-loaded forklift truck being converted into a graphic display signal in the display data producing section 9 to be displayed on the monitor screen 11. Other than this is the same as the image shown in FIG. 5 of the first embodiment, and indications the same as those of FIG.5 are denoted by the same reference numerals.

The barycenter position indication 146 represents the position of center of gravity of the cargo-loaded forklift by level representation as shown in FIGS.14A to D for example, and when the position of the center of gravity is out of the predetermined permissible range of barycenter position, the level representation is changed in color to an alarm color which is different from a usual color.

FIG.14A is a case in which whether the barycenter is shifted toward front side or toward rear side of the forklift truck from the reference barycenter position by left-pointing and right-pointing arrows 300, 300 and degree of deviation of the barycenter shift from the reference position is expressed by deepness of color of the arrows. In FIG.14A, upper and intermediate indications mean that the barycenter deviates rearward from the reference barycenter, the intermediate indication expresses that the rearward deviation is significant by the deepness of color of the right-pointing arrows of the intermediate indication, and a lowermost indication means that the barycenter deviates slightly frontward.

FIG.14B is a case in which the barycenter position is indicated by the position of a solid filled small rectangle 302 in a line of small rectangles 304 of level representation of barycenter. In FIG.14B, rectangles in the left from the center are hollow (not colored) and those in the right from the center are lightly colored in each of lines of small rectangles 304, the center indicating the reference barycenter position, the left side and right side from the center indicating the front side and rear side of the forklift truck from the reference barycenter respectively. In FIG.14B showing a plurality of indication lines of small rectangles for indicate parycenter position in level representation, each of the indication lines means that the lower the indication line is, the remoter the barycenter is shifted rearward from the reference barycenter position, and the upper the indication line is, the remoter the barycenter is shifted frontward from the reference barycenter position.

FIG.14C is a case in which the barycenter position is indicated by where a round mark 308 is positioned in a horizontally long rectangular frame indication 306. When the round mark 308 is positioned at the center in the rectangular frame indication 306, the barycenter of the cargo-loaded forklift coincide with the reference barycenter of the forklift truck, and direction and degree of deviation of the forklift bartycenter from the reference barycenter position can be recognized by direction and degree of deviation of the round mark 308 from the center of the rectangular frame indication 306. The round mark is indicated by a solid filled round mark, or hollow round mark (not colored), or lightly colored round mark depending its position in the rectangular frame indication.

FIG. 14D is a case in which adequate cargo handling drive source indication 147 is displayed as a modal indication 310 for the operator to judge whether cargo handling is possible only by the motor, or possible only by the engine, or possible by using both the motor and engine, or cargo handling is not possible, and the modal indication 310 being displayed below the barycenter position indication by level representation 304. Thus, the barycenter posision of the cargo loaded forklift is indicated by the solid filled small rectangle 302 in the barycenter position level indication 304, and just below this indication are displayed operation modes possible to operate the forklift truck with the position of the barycenter indicated in the barycenter position level indication 304. In the modal indication 310, 'X' means that cargo handling operation is not permissible, 'E' means cargo handling operation is permissible by driving the engine, 'M' means cargo handling operation is permissible by driving the motor, and 'E+M' means cargo handling operation is permissible by driving both the engine and motor.

According to the third embodiment, the position data of center of gravity of the cargo loaded forklift is converted into a graphic display signal and displayed on the monitor screen as the barycenter position indication 146, further, a drive source or sources adequate to drive the fork 116 is displayed in the adequate cargo handling drive source indication 147, and the barycenter position indication is changed in color to an alarm color when the barycenter is out of the predetermined permissible range of barycenter position, so the operator can recognize without fail in cargo handling operation that whether the center of gravity of the forklift truck is in an appropriate position or not by taking a glance at the barycenter position indication 146 and adequate cargo handling drive source indication 147, and occurrence of slip down of the cargo or fall down of the forklift truck in cargo handling operation can be prevented and safety in forklift operation is improved.

### [The fourth embodiment]

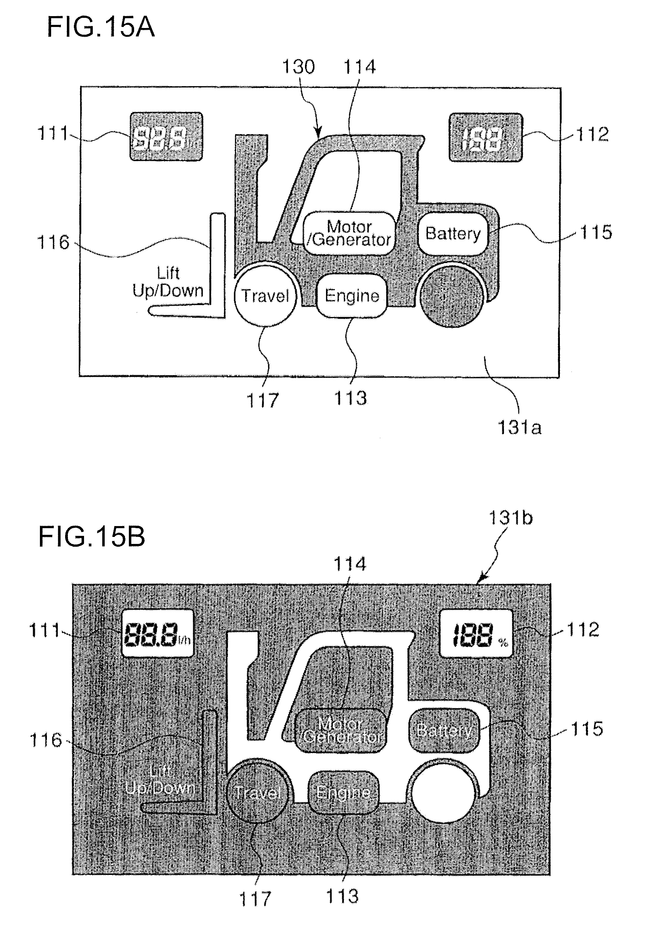

FIG.15A is a monitor screen image of the fourth embodiment when the forklift truck is in bright environment, and FIG.15B is when the forklift truck is in dark environment.

In this fourth embodiment, background color tone of the monitor screen image on the monitor screen 11 is selected in accordance with the brightness around the forklift detected by the background condition sensor 6, and actuating elements are displayed to be highly visible in accordance with the background color tone.

Fig.15A shows when the forklift truck is operated in bright environment such as in daytime. In this case, the vehicle body 130 showing the side appearance shape of the forklift truck is displayed by a dark color in a bright background and the actuating elements are indicated by symbolic open icons of a color tone different from that of the vehicle body 130 with the name of each of the actuating elements written in the icons or near the icons , the icons being superimposed on the figure of the vehicle body 130. FIG. 15B shows when the forklift truck is operated in dark environment such as in nighttime. In this case, the vehicle body 130 showing the side appearance shape of the forklift truck is displayed by a bright color in a dark background and the actuating elements are indicated by symbolic icons of a color tone different from that of the vehicle body 130 with the name of each of the actuating elements written in the icons or near the icons, the icons being superimposed on the figure of the vehicle body 130.

According to the fourth embodiment, background color tone of the monitor screen image on the monitor screen 11 is changed depending on whether the forklift truck is operated in a bright environment or dark environment, and the actuating elements are displayed in a tone different from the background tone, so the operator can view the image indicating operation condition of the forklift on the monitor screen 11 without eyestrain.

### INDUSTRIAL APPLICABILITY

According to the invention, a display device of a hybrid cargo handling vehicle and a hybrid cargo handling vehicle equipped with the display device are provided, with which whether operation is performed by engine drive or motor drive or engine plus motor drive and whether driving operation, i.e. energy consuming operation or energy recovering operation is performed, and also fuel consumption rate of the engine, state of charge of the battery, and position of center of gravity of the vehicle are displayed in both traveling and cargo handling operations, and the operator is possible by monitoring the displayed indications to perform safe operation of the cargo handling vehicle with high efficiency and high cargo handling power without occurrence of slip down of the cargo or fall down of the vehicle.

## Claims

1. A display device of a hybrid cargo handling vehicle having a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, comprising;
a fuel consumption indication data producing means to produce fuel consumption rate indication data by converting detected fuel consumption rate, i.e. flow rate of fuel supplied to the engine into a display signal to display the fuel flow rate in an easily recognizable pattern such as in numeric characters and letters or in a graphic mode,
a battery charge condition indication data producing means to produce battery charge condition indication data by converting battery charge rate estimated based on detected terminal voltage of the battery into a display signal to display the battery charge rate in an easily recognizable pattern, and
a monitor screen for displaying thereon said fuel consumption rate and battery charge rate in said easily recognizable patterns according to said display signals.

2. A display device of a hybrid cargo handling vehicle according to claim 1, wherein said fuel consumption indication data producing means allows to display current value of fuel consumption rate in said easily recognizable pattern successively in real time and integrated value thereof for a certain time period on the monitor screen, and said battery charge condition indication data producing means allows to display current value of battery charge rate in said easily recognizable pattern successively in real time and integrated value thereof for a certain time period on the monitor screen.

3. A display device of a hybrid cargo handling vehicle according to claim 1, wherein said fuel consumption indication data producing means allows the fuel consumption rate indication displayed in said easily recognizable pattern to be changed in color to an alarm color different from a usual color when the fuel consumption rate exceeds a predetermined permissible value.

4. A display device of a hybrid cargo handling vehicle according to claim 1, wherein said battery charge condition indication data producing means allows the battery charge condition indication displayed in said easily recognizable pattern to be changed in color to an alarm color different from a usual color when the estimated battery charge rate is lower than a predetermined permissible value.

5. A display device of a hybrid cargo handling vehicle according to claim 1, wherein said fuel consumption indication data producing means converts the detected fuel consumption rate into a display signal to display the fuel consumption rate in numeric characters and in a graphic mode indicating the fuel consumption rate in level representation and allows the two types of indications to be displayed on the monitor screen concurrently, and said battery charge condition indication data producing means converts the estimated battery charge rate into a display signal to display the fuel consumption rate in numeric characters and in a graphic mode indicating the fuel consumption rate in level representation and allows the two types of indications to be displayed on the monitor screen concurrently.

6. A display device of a hybrid cargo handling vehicle having a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, comprising;
a vehicle contour indication data producing means to produce vehicle contour indication data to display the cargo handling vehicle in silhouette,
an actuating elements indication data producing means to produce actuating elements indication data to display actuating elements such as the engine, battery, electric motor, oil-hydraulic motor, cargo handling equipment, etc. in shapes of colored graphic symbols,
an operating condition determining means to determine operating conditions of whether the cargo handling vehicle is in driving operation(traveling and/or cargo lifting operation) or in energy recovering operation based on detected operating conditions of the actuating elements,
an operating condition indication data producing means to produce operating condition indication data to display said determined operating condition of the cargo handling vehicle so that directions of energy transmission between the actuating elements are easily recognizable, and
a monitor screen for displaying thereon concurrently said cargo handling vehicle in silhouette, said actuating elements in shapes of colored graphic symbols, and said operating condition of the cargo handling vehicle indicating directions of energy transmission between the actuating elements.

7. A display device of a hybrid cargo handling vehicle according to claim 6, wherein said operating condition indication data producing means allows energy transmission between the actuating elements to be displayed by arrows connecting the graphic symbols of the actuating elements, the arrows being differentiated in color to distinguish energy transmission in driving operation from energy transmission in energy recovering operation.

8. A display device of a hybrid cargo handling vehicle according to claim 6, wherein said operating condition indication data producing means allows energy transmission between the actuating elements to be displayed by heads of arrows moving sequentially in direction of energy transmission between the graphic symbols of the actuating elements, the heads of arrows being differentiated in color to distinguish energy transmission in driving operation and energy transmission in energy recovering operation.

9. A display device of a hybrid cargo handling vehicle according to claim 6, wherein are provided a background condition indication data producing means to produce background condition indication data to determine background color tone of the image displayed on the monitor screen in accordance with detected brightness around the cargo handling vehicle, and the background condition indication data producing means allows said determined color tone background to be displayed on the monitor screen.

10. A display device of a hybrid cargo handling vehicle according to claim 9, wherein said actuating elements indication data producing means can produce actuating element indication data to display actuating elements such as the engine, battery, electric motor, oil-hydraulic motor, cargo handling equipment, etc. in shapes of graphic symbols of color tones different from those of the background selected by the background condition indication data or the silhouette of the cargo handling vehicle.

11. A display device of a hybrid cargo handling vehicle having a traveling section for driving traveling wheels by means of either or both of an engine such as an internal combustion engine and a battery-operated electric motor and a cargo handling section provided with an oil-hydraulic pump driven by means of either or both of the engine and the battery-operated electric motor and an oil hydraulic motor for recovering potential energy of a lifted cargo when the cargo is lifted down, comprising;
a barycenter position indication data producing means to produce barycenter position indication data to display in a graphic form the center of gravity of the cargo-loaded cargo handling vehicle estimated based on load measurements at several positions of the vehicle, and
a monitor screen for displaying thereon said barycenter position in a graphic form.

12. A display device of a hybrid cargo handling vehicle according to claim 11, wherein said barycenter position indication data producing means allows the barycenter position indication displayed in said graphic form to be changed in color to an alarm color different from a usual color when said estimated position of barycenter is out of the predetermined permissible range of barycenter position.

13. A display device of a hybrid cargo handling vehicle according to claim 11, wherein said barycenter position indication data producing means produces an adequate cargo handling drive source indication data to indicate on the monitor screen a drive source selected from among the electric motor, engine, and the motor plus engine based on the detected barycenter position to be adequate to drive the cargo handling equipment.

14. A hybrid cargo handling vehicle equipped with any display device or devices according to any one of claims 1-13.
